(19) Europäisches Patentamt
European Patent Office
Office européen des brevets

(11) Publication number: 0 154 460 B1

(12) **EUROPEAN PATENT SPECIFICATION**

(45) Date of publication of patent specification: **04.07.90**

(51) Int. Cl.[5]: **C 08 L 27/12,** C 08 K 5/43

(21) Application number: **85301193.0**

(22) Date of filing: **22.02.85**

(54) **Fluoroelastomer compositions containing fluoroaliphatic sulfonamides as curing agents.**

(30) Priority: **27.02.84 US 583762**

(43) Date of publication of application:
**11.09.85 Bulletin 85/37**

(45) Publication of the grant of the patent:
**04.07.90 Bulletin 90/27**

(84) Designated Contracting States:
**BE DE FR GB IT NL SE**

(56) References cited:
**DE-A-1 958 972**
**US-A-3 895 062**

(73) Proprietor: **MINNESOTA MINING AND MANUFACTURING COMPANY**
**3M Center, P.O. Box 33427**
**St. Paul Minnesota 55133-3427 (US)**

(72) Inventor: **Guenthner, Richard A. c/o Minnesota Mining and**
**Manufacturing Company 2501 Hudson Road**
**P.O. Box 33427 St. Paul Minnesota 55133 (US)**
Inventor: **Kolb, Robert E. c/o Minnesota Mining and**
**Manufacturing Company 2501 Hudson Road**
**P.O. Box 33427 St. Paul Minnesota 55133 (US)**

(74) Representative: **Baillie, Iain Cameron et al**
**c/o Ladas & Parry Isartorplatz 5**
**D-8000 München 2 (DE)**

EP 0 154 460 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method for vulcanizing fluorocarbon elastomers and vulcanizing agents for use therein. In another aspect, the invention relates to vulcanizable fluorocarbon elastomer compositions containing vinylidene fluoride polymers and vulcanizing agent and adjuvants. In a further aspect, this invention relates to the use of fluoroaliphatic sulfonamide compounds along with polyhydroxide compounds or polyamine compounds in the vulcanization of vinylidene fluoride polymers.

Among the polymers which are difficult to vulcanize are fluorocarbon elastomers prepared by the polymerization of vinylidene fluoride with other terminally unsaturated monoolefins, such as hexafluoropropene, 1-hydropentafluoropropene, chlorotrifluoroethylene, tetrafluoroethylene, and fluorinated vinyl ethers, such as perfluoromethyl vinyl ether. The vulcanized or cured fluorocarbon elastomers have valuable properties, such as acid and base resistance, thermal stability, high tensile strength, low compression set, and good tear resistance. As such, the fluorocarbon elastomers have become polymers of choice for service as gaskets, seals, and O-rings in severe or harsh environments in the automotive, aircraft, and chemical industries.

Presently used conventional vulcanizing (or curing) agents for fluorocarbon elastomers include aromatic polyhydroxy compounds, such as polyphenols, which are usually used in combination with certain vulcanization accelerators, viz., organo-onium compounds, e.g. ammonium, phosphonium, and sulfonium compounds. See, for example, U.S. Patent Nos. 3,655,727 (Patel et al), 3,712,877 (Patel et al), 3,857,807 (Komatani), 3,686,143 (Bowman), 3,933,732 (Schmiegel), 3,876,654 (Pattison), 4,233,421 (Worm), 4,250,278 (Suzuki et al), 4,259,463 (Moggi et al), and 4,358,559 (Holcomb et al); and also see West, A. C. and Holcomb, A. G., "Fluorinated Elastomers", Kirk-Othmer: *Encyclopedia of Chemical Technology,* Vol. 8, 3rd Ed., John Wiley and Sons, Inc., pp. 500—515 (1979). In addition to the vulcanizing accelerators, divalent metal oxides or hydroxides (as inorganic acid acceptors), fillers, processing aids, and other adjuvants are also conventionally employed in the vulcanization of fluorocarbon elastomer compositions.

DE—A—1,958,972 discloses fluorocarbon elastomer gums containing a conventional curing agent and an excessive amount of fluorinated fluid plasticisers. To these compositions are added "compatibility extenders" which, it is indicated, allow the uncured compositions to be milled, extruded or moulded similarly to or more satisfactorily than the unplasticised compounds. Examples of compatibility extenders include certain fluoroaliphatic sulfonamides. However there is no indication that such sulfonamides are useful as crosslinking agents. The minimum concentration of fluoroaliphatic sulfonamide disclosed in DE—A—1,958,972 is 5 g per hundred grams of gum whereas the upper limit of 0.006 moles sulfonamide curing agent per hundred grams fluorocarbon elastomer as specified in the present invention typically corresponds to about 3 g per hundred grams of gum.

US 3,895,062 discloses monofunctional biphenylperfluoroalkyl sulfonamides and their use as curing agents. However there is no indication to use such sulfonamide curing agents in conjunction with conventional curing agents.

Although conventionally vulcanized fluorocarbon elastomers have many useful properties, as mentioned above, they generally do not have sufficiently high tensile strength combined with sufficiently high elongation for certain applications. Such applications where high tensile strength, high elongation fluorocarbon elastomers would be especially useful include blowout preventers for oil wells, accumulator bladders, and diaphragms. Although increasing the cross-link density of cured elastomers will increase the tensile strength thereof, such an approach often adversely affects the elongation of the elastomer. This invention relates to the achievement of high tensile strength accompanied by high elongation in cured fluorocarbon elastomers by using a novel vulcanizing, or curing, agent which does not adversely affect the other desired properties of the cured fluorocarbon elastomer.

The present invention provides a composition comprising a fluorocarbon elastomer gum, a fluoroaliphatic sulfonamide curing agent and optionally a further curing agent, the total concentration of curing agent(s) being at least 0.001 moles per hundred grams of said gum and sufficient to crosslink the elastomer gum, subject to the proviso that if the sulfonamide curing agent is monofunctional then:

a) said another curing agent is necessarily present, and

b) the amount of monofunctional fluoroaliphatic sulfonamide curing agent is in the range 0.0002 to 0.006 moles per hundred grams fluorocarbon elastomer.

The invention also provides a shaped article comprising the above-defined composition which has been cured.

Furthermore the invention provides a method of preparing a shaped article comprising the steps of:

a) providing a curable composition as defined above,

b) heating said composition to a temperature sufficient to cure said composition, and

c) recovering said shaped article.

Preferred features of the invention are defined in the dependent claims.

Preferred classes of the fluoroaliphatic sulfonamide curing agents useful in the practice of this invention can be represented by the following general formula:

$$R_f(A)_zSO_2NR(M_{1/x}) \text{ or} \qquad \text{I}$$

$$R_f'[(A)_zSO_2NR(M_{1/x})]_2 \qquad \text{II}$$

wherein

$R_f$ represents a monovalent fluoroaliphatic radical having from 1 to 20 carbon atoms, preferably 1 to 8 carbon atoms,

$R_f'$ represents a divalent fluoroaliphatic radical having from 1 to 20 carbon atoms, preferably from 2 to 10 carbon atoms,

A represents an organic linkage such as for example $—CR^1R^2—$, $—CR^1R^2CR^3R^4—$, and $—CR^1{=}CR^2—$, wherein $R^1$, $R^2$, $R^3$, and $R^4$ are selected from the group consisting of hydrogen atom, fluorine atom, chlorine atom, and lower alkyl group, having, for example, 1 to 2 carbon atoms,

z is zero or one,

R represents hydrogen atom or alkyl radical having from 1 to 20 carbon atoms, preferably 1 to 12 carbon atoms, and

M represents hydrogen atom or salt forming cation with valence x, which is 1, 2, or 3.

The monovalent fluoroaliphatic radical, $R_f$, is a fluorinated, stable, inert, non-polar, saturated moiety. It can be straight chain, branched chain, and, if sufficiently large, cyclic, or combinations thereof, such as alkyl cycloaliphatic radicals. $R_f$ will have 1 to 20 carbon atoms, preferably 4 to about 10, and will typically contain 40 to 83 weight percent, preferably 50 to 78 weight percent fluorine. The preferred compounds are those in which the $R_f$ groups is fully or substantially completely fluorinated, as in the case where $R_f$ is perfluoroalkyl, $C_nF_{2n+1}$, where n is 1 to 20.

The divalent fluoroaliphatic radical, $R_f'$, is a fluorinated, stable, inert, non-polar, saturated moiety. It can straight chain, branched chain, and, if sufficiently large, cyclic, or combinations thereof, such as alkylcyclo-aliphatic diradicals. $R_f'$ will have 1 to 20 carbon atoms, preferably 1 to about 6. The preferred compounds are those in which the $R_f'$ group is fully or substantially completely fluorinated, as in the case where $R_f'$ is perfluoroalkyl, $C_nF_{2n}$, where n is 1 to 20, or perfluorocycloalkyl, $C_nF_{2n-2}$, where n is 5 to 20.

With respect to either $R_f$ or $R_f'$, the skeletal chain or carbon atoms can be interrupted by divalent oxygen or trivalent nitrogen hetero atoms, each of which is bonded only to carbon atoms, but preferably where such hereto atoms are present, such skeletal chain does not contain more than one said hereto atom for every two carbon atoms. An occasional carbon-bonded hydrogen atom, or chlorine atom may be present; where present, however, they preferably are present not more than once for every two carbon atoms in the chain. Where $R_f$ or $R_f'$ is or contains a cyclic structure, such structure preferably has 5 or 6 ring member atoms, 1 or 2 of which can be said hetero atoms, i.e., oxygen and/or nitrogen. Examples of $R_f$ radicals are fluorinated alkyl, e.g. $C_6F_{13}—$, $C_8F_{17}—$, alkoxyalkyl, e.g. $C_3F_7OCF_2—$. Examples of $R_f'$ are fluorinated alkylene, e.g. $—C_4F_8—$, $—C_6F_{12}—$. Where $R_f$ is designated as a specific radical, e.g. $C_8F_{17}—$, it should be understood that this radical can represent an average structure of a mixture, e.g. $C_6F_{13}—$ to $C_{10}F_{21}—$, which mixture can also include branched structures.

Where R is an alkyl radical, it can be unsubstituted or substituted. Useful substituents include, for example, carbonyl groups, e.g.

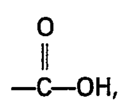

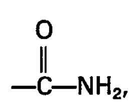

epoxy groups, e.g.

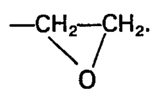

The fluorocarbon elastomers or gums, e.g. copolymers of vinylidene fluoride and hexafluoropropene, can be compounded with the fluoroaliphatic sulfonamide curing agent and the polyhydroxy or polyamine curing agent and the vulcanizing adjuvants commonly used in vulcanizing such elastomers, namely vulcanization accelerators, such as the aforementioned organoammonium, phosphonium, and sulfonium compounds, e.g. triphenylbenzylphosphonium chloride, divalent metal oxides or hydroxides (as acid acceptors), e.g. MgO and $Ca(OH)_2$, and reinforcing agents or fillers, e.g., carbon black and silica. The thus compounded elastomer or gumstock can then be shaped, e.g. by molding or extruding, in the form of seals, O-rings, gaskets, or other molded or extruded parts or goods, and heat applied to effect vulcanization (or curing or crosslinking), to produce a shaped elastomeric article with desirable tensile strength and elongation and other desirable properties, such as hardness and tear strength.

Fluoroaliphatic sulfonamides suitable as curing agents in the practice of this invention include known compounds [see, for example, U.S. 2,732,398 (Brice, et al)]. They can be prepared by the reaction of

ammonia or primary amines with perfluoroalkane sulfonyl fluorides (obtained by electrochemical fluorination of alkyl or alkylene sulfonyl halides), as shown by the following reaction scheme:

$$R_fSO_2F + RNH_2 \rightarrow R_fSO_2NHR$$

They can also be prepared following the procedures described in U.S. 4,296,034 (Bouvet et al), i.e.

$$R_fC_2H_4SO_2Cl + RNH_2 \rightarrow R_fC_2H_4SO_2NHR$$

Salts of the sulfonamides can be prepared by reaction of the acidic sulfonamide compound with a suitable base, as described, for example, in U.S. 2,803,656 (Ahlbrecht et al):

$$R_fSO_2NHR + NaOCH_3 \rightarrow R_fSO_2N(R)Na$$

Representative fluoroaliphatic sulfonamide compounds suitable for the practice of this invention include the following:

$CF_3SO_2NH_2$
$CF_3SO_2N(C_4H_9)H$
$C_4F_9SO_2N(CH_3)H$
$C_8F_{17}SO_2N(CH_3)H$
$C_8F_{17}SO_2N(CH_3)Na$
$C_8F_{17}C_2H_4SO_2N(CH_3)Na$
$NH(CH_3)SO_2(CF_2)_8SO_2N(CH_3)H$
$C_8F_{17}SO_2NHNa$
$C_8F_{17}SO_2N(C_{12}H_{25})H$
$C_6F_{13}SO_2N(C_2H_5)K$
$C_8F_{17}SO_2N(C_6H_5)H$
$C_4F_9CH_2SO_2N(CH_3)H$
$C_8F_{17}SO_2N(CH_3)Mg_{1/2}$
$C_8F_{17}SO_2N(CH_3)NH_4$
$C_8F_{17}SO_2N(CH_3)N(C_2H_5)_3H$

Curing agents that can be used in combination with the fluoroaliphatic sulfonamide curing agents include both the conventional curing agents used to cure fluoroelastomers, i.e. polyhydroxy compounds, organic polyamines, and the recently developed curing agents such as fluoroaliphatic polyols and allyl ethers of aromatic polyhydroxy compounds. A second curing agent must be employed when the fluoroaliphatic sulfonamide is monofunctional, i.e. of the class of Formula I. Difunctional fluoroaliphatic sulfonamides, i.e. of the class of Formula II, can be used alone, that is, in the absence of a second curing agent. Representative examples of the above-mentioned second curing agents that can be used with monofunctional fluoroaliphatic sulfonamides include:

hydroquinone
resorcinol
4,4'-dihydroxydiphenylsulfone (Bisphenol S)
2,4'-dihydroxydiphenylsulfone
2,2-isopropylidine-bis (4-hydroxybenzene) (Bisphenol A)
2,2-hexafluoroisopropylidine-bis(4-hydroxybenzene) (Bisphenol AF)
4,4'-dihydroxybenzophenone
4,4'-biphenol
1-allyloxy-4-hydroxybenzene
Bisphenol A monoallyl ether
1,4-bis(hydroxymethyl) perfluorobutane
hexamethylenediamine carbamate
N,N'-dicinnamylidine-1,6-hexanediamine

Mixtures of the foregoing can also be used.

Organo-onium compounds which can be used as accelerators in the compounded fluorocarbon elastomer compositions of this invention include the following representative compounds and mixtures thereof:

triphenylbenzyl phosphonium chloride
tributylallyl phosphonium chloride
tributylbenzyl ammonium chloride
tetrabutyl ammonium bromide

triphenyl sulfonium chloride
tritolyl sulfonium chloride
8-benzyl-1,8-diazabicyclo[5,4,0]-7-undecenium chloride
benzyl tris(dimethylamino)phosphonium chloride
benzyl(diethylamino)diphenylphosphonium chloride.

The polymers that are vulcanizable or curable according to this invention are known linear, saturated, thermoplastic, fluorinated polymers or gums which can be classified as fluorocarbon elastomers. Such polymers are described, for example, in the aforementioned prior art, e.g. U.S. Patent Nos. 4,233,421 (Worm) and 4,287,320 (Kolb). Many of these are commercially available, sold under trademarks such as "Fluorel" and "Viton", and are copolymers of vinylidene fluoride and one or more other monoolefins (usually halogenated).

Among the polymers that can be vulcanized in accordance with this invention are the elastomeric copolymers of vinylidene fluoride with monomers selected from, for example, hexafluoropropene, chlorotrifluoroethylene, 2-chloropentafluoropropene, fluorinated alkyl vinyl ether, e.g., perfluoromethyl vinyl ether, tetrafluoroethylene, 1-hydropentafluoropropene, dichlorodifluoroethylene, trifluoroethylene, and 1,1-chlorofluoroethylene. These monoolefins can be copolymerized with each other in groups of two or more. They can also be copolymerized with other olefinic compounds such as ethylene or propylene. The preferred elastomers are copolymers of vinylidene fluoride with at least one terminally unsaturated fluoromonoolefin containing at least one fluorine atom substituent on each double-bonded carbon atom, each carbon atom of said fluoromonoolefin being substituted only with fluorine, chlorine, hydrogen, lower fluoroalkyl radical, or lower fluoroalkoxy radical, particularly hexafluoropropene, tetrafluoroethylene, chlorotrifluoroethylene, and 1-hydropentafluoropropene. Particularly preferred are the fluorocarbon elastomers produced by copolymerizing vinylidene fluoride with hexafluoropropene as described in U.S. Patent Nos. 3,051,677 and 3,318,854 and those copolymers produced by copolymerizing vinylidene fluoride, hexafluoropropene, and tetrafluoroethylene as described in U.S. Patent No. 2,968,649. The elastomeric copolymers of hexafluoropropene and vinylidene fluoride having between about 15 and about 50 mole percent hexafluoropropene, optionally with the addition of up to 30 mole percent tetrafluoroethylene, are illustrative of this preferred class. Mixtures or blends of fluorinated elastomers, e.g. of different viscosities, are also suitable.

When used as the sole curing agent, a sufficient amount of difunctional fluoroaliphatic sulfonamide curing agent must be used in order to bring about cross-linking of the fluorocarbon elastomer gum. In general, this amount is at least 0.001 mhr (moles per 100 grams fluorocarbon elastomer, gum, or rubber).

When monofunctional fluoroaliphatic sulfonamide curing agent and a second curing agent are used in combination to cure the fluorocarbon elastomer, the total amount of both must be sufficient to bring about cross-linking of the fluorocarbon elastomer. This requirement is also applicable when difunctional fluoroaliphatic curing agent and a second curing agent are used in combination. A sufficient amount of fluoroaliphatic sulfonamide curing agent must be used with the second curing agent in order to provide sufficient cross-linking to provide improved properties, e.g. increased tensile strength, when compared with the properties obtained in the absence of fluoroaliphatic sulfonamide curing agent. The amount of monofunctional fluoroaliphatic sulfonamide curing agent, e.g., $C_8F_{17}SO_2N(CH_3)H$, that is used with the conventional curing agents e.g., polyhydroxy compounds, in the curing of fluorocarbon elastomers in the present invention, ranges from 0.0002 mhr to 0.006 mhr. The amount of the conventional curing agent used in conjunction with the fluoroaliphatic sulfonamide will be about 0.0005 mhr to about 0.01 mhr. The total concentration of the curing agents must be at least 0.001 mhr. In general, increasing the concentration of the fluoroaliphatic sulfonamide curing agent and conventional curing agent, will result in a more highly crosslinked fluorocarbon elastomer.

The fluoroaliphatic sulfonamide curing agents of this invention, other curing agents, accelerators, acid acceptors, reinforcing agents, fillers, and other adjuvants such as processing aids, softeners, plasticizers, etc. can be incorporated into the fluorocarbon elastomer gum in the conventional manner.

Objects and advantages of this invention are illustrated in the examples described hereinafter. In those examples, curing conditions and properties of cured compounded gumstock were measured using the following procedures and test methods:

Curing characteristics

ASTM D—2048—82 was run on uncured compounded gumstock using the Oscillating Disc Rheometer (ODR) Model (Monsanto Company) 100S, an oscillating frequency of 100 cpm and a 3° arc. Minimum torque ($M_L$) and the torque attained at a stated time ($M_H$) were determined. Also determined were time in minutes for torque to increase 0.1N·m (1 lbf·in), $t_{sl}$, or time for torque to reach 5.6 N·m (50 lbf·in), $t_{5.6}$ respectively.

Press cure

Elastomer sheets 150 mm × 150 mm × 1.8 mm were prepared for determination of physical properties by pressing uncured compounded gumstock at about 6.9 × $10^3$ kPa for the indicated time at 177°C.

Post cure

Samples were removed from the press and placed in a circulating air oven. The oven was maintained at the indicated temperature for the indicated time. The samples were then removed, cooled to room temperature, and physical properties determined.

Accelerated aging

Post cured samples were placed in a circulating air oven for the indicated time at 275°C. The samples were then removed for measurement of physical properties according to ASTM D—573—81.

Tensile strength at break, elongation at break, modulus at 100% elongation

Samples cut from a 1.8 mm thick cured elastomer sheet were tested according to ASTM D—412—80 using the TENSOMETER, Model 500 (Monsanto Company) with a die having the following dimensions: A = 3.5 mm, L = 19 mm, C = 51 mm.

Hardness, Shore A

Hardness was measured at room temperature on cured samples according to ASTM D—2240—81 using Shore Instrument and Mfg. Co.'s "A—2" device.

Compression set

Tests according to ASTM D—395—78, Method B, were run on O-rings after the indicated press and post cures and the indicated temperature and time under compression. Results are reported as percent (%) change in dimension from original.

The fluoroaliphatic sulfonamides employed in the following examples were prepared from the corresponding sulfonyl fluoride compounds by reaction with ammonia or an alkyl amine. A subsequent reaction with alkali metal methoxides yielded the salt. Preparation of the fluoroaliphatic sulfonamides and their salts followed the general procedure described in Example 1 of U.S. Patent No. 2,803,656 (Ahlbrecht et al). The magnesium salt was prepared in a similar manner by reaction of magnesium methoxide with the fluoroaliphatic sulfonamide. The ammonium and triethylammonium salts were prepared by reacting the fluoroaliphatic sulfonamide with excess liquid ammonia and excess triethylamine, respectively.

In all of the following examples, the terms "parts" and "phr" represent weight in grams and grams per hundred parts gum, elastomer, or rubber, respectively.

Curing agents not of the fluoroaliphatic sulfonamide class and cure accelerators employed in the following examples are listed in Tables I and II, respectively.

TABLE I

Curing agents

| No. | Designation | Chemical Identity |
|---|---|---|
| 1 | Bisphenol AF | 4,4' $HOC_6H_4C(CF_3)_2C_6H_4OH$ |
| 2 | Bisphenol S | 4,4' $HOC_6H_4SO_2C_6H_4OH$ |
| 3 | Bisphenol C | 4,4' $HOC_6H_4COC_6H_4OH$ |
| 4 | HQ | 1,4 $HOC_6H_4OH$ |
| 5 | Biphenol | 4,4' $HOC_6H_4{-}C_6H_4OH$ |
| 6 | Bisphenol A-AE (mixture of components a:b:c in 1.1:1.6:1 weight ratio) | a. $HOC_6H_4C(CH_3)_2C_6H_4OH$<br>b. $HOC_6H_4C(CH_3)_2C_6H_4OCH_2CH{=}CH_2$<br>c. $CH_2{=}CHCH_2OC_6H_4C(CH_3)_2C_6H_4OCH_2CH{=}CH_2$ |
| 7 | FC-diol | $HOCH_2(CF_2)_4CH_2OH$ |

TABLE II

Cure accelerators

| No. | Designation | Chemical Identity |
|---|---|---|
| 1 | TPBPC | $(C_6H_5)_3P(CH_2C_6H_5)^+Cl^-$ |
| 2 | TBBAC | $(C_4H_9)_3N(CH_2C_6H_5)^+Cl^-$ |
| 3 | TTSC | $[(CH_3)C_6H_4]_3S^+Cl^-$ |

Example 1

A vinylidene fluoride copolymer gum (FKM C) was compounded on a two-roll rubber mill with a low level of a conventional vulcanizing agent and a normal level of adjuvants. FKM C contains 80 mole % $CF_2=CH_2$ and 20 mole percent $CF_3CF=CF_2$. In one of the runs, a fluoroaliphatic sulfonamide curing agent of this invention was incorporated into the formulation. A control run, i.e., formulation without fluoroaliphatic sulfonamide curing agent, was also run for the purpose of comparison. The milled, compounded gumstocks were evaluated for curing characteristics, and properties of the cured gumstocks were measured after press cure, post cure, and aging.

Curable gumstock compositions, curing characteristics and properties of cured gumstocks are shown in Table III.

TABLE III

| | Run no. | |
|---|---|---|
| Curable gumstock ingredients | 1 | 2 |
| FKM C, high viscosity gum, parts | 100 | 100 |
| Carbon black (N-110), phr | 25 | 25 |
| $Ca(OH)_2$, phr | 6 | 6 |
| TPBPC, mhr x $10^3$ | 1.4 | 0.77 |
| Bisphenol AF, mhr x $10^3$ | 0.625 | 0.625 |
| $C_8F_{17}SO_2N(CH_3)Na$, mhr x $10^3$ | 0 | 2.81 |
| Curing characteristics | | |
| ODR, 177°C | | |
| $M_L$, N·m | 4.86 | 5.20 |
| $M_H$, N·m, 12 minutes. | 5.54 | 5.99 |
| $t_{s1}$, minutes | 3 | 2.1 |
| $t_{5.6}$, minutes | 8 | 5.0 |
| Properties of cured gumstock | | |
| Press cure properties (2.5 h/177°C) | | |
| Tensile strength, MPa | 7.51 | 20.04 |
| Elongation at break, % | 718 | 550 |
| Modulus, 300%, MPa | 4.79 | 9.51 |
| Post cure properties (20 h/177°C) | | |
| Tensile strength, MPa | 10.42 | 21.63 |
| Elongation at break, % | 550 | 411 |
| Modulus, 300%, MPa | 7.31 | 15.24 |
| Hardness, Shore A | 78 | 76 |
| Tear resistance, kN/m (ASTM D 624-81, Die C, 25°C) | 26 | 28 |

Faster cure rates, considerably higher tensile strengths and modulus, and improved tear resistance were obtained in Run 2. Relatively high elongations were maintained in Run 2 even at the high tensile strengths achieved.

Example 2

A vinylidene fluoride copolymer gum (FKM C) was compounded in several different runs on a two-roll rubber mill with a conventional vulcanizing agent and adjuvants. In nine of the runs, a fluoroaliphatic sulfonamide curing agent of this invention was incorporated into the formulation. The fluoroaliphatic

sulfonamide curing agents were all in the form of a salt, except for Run no. 12. The amounts of the various ingredients are shown in Table IV.

TABLE IV

| Curable gumstock ingredients | |
|---|---|
| FKM C, parts | 100 |
| Carbon black (N-990), phr | 30 |
| MgO, phr | 3 |
| $Ca(OH)_2$, phr | 6 |
| TPBPC, mhr x $10^3$ | 1.22 |
| Bisphenol AF, mhr x $10^3$ | 2.23 |
| Fluoroaliphatic sulfonamide curing agent, mhr x $10^3$ | 1.22 |

The fluoroaliphatic sulfonamide curing agent for each run is listed below:

| Run no. | Curing agent |
|---|---|
| 3 | Control |
| 4 | $C_8F_{17}SO_2N(CH_3)Na$ |
| 5 | $C_4F_9SO_2N(CH_3)Na$ |
| 6 | $C_8F_{17}SO_2N(C_4H_9)Na$ |
| 7 | $H(CH_3)NSO_2(CF_2)_8SO_2N(CH_3)Na$ |
| 8 | $C_8F_{17}C_2H_4SO_2N(CH_3)Na$ |
| 9 | $C_8F_{17}SO_2N(H)Na$ |
| 10 | $C_8F_{17}SO_2N(CH_3)(Mg)_{1/2}$ |
| 11 | $C_8F_{17}SO_2N(CH_3)NH_4$ |
| 12 | $C_8F_{17}SO_2N(CH_3)N(C_2H_5)_3H$ |

The milled, compounded gumstocks were evaluated for curing characteristics, and properties of the cured gumstocks were measured after press cure, post cure, and aging. Compression set was also determined. A control run, i.e. formulation without fluoroaliphatic sulfonamide curing agent, was also run for the purpose of comparison.

Curing characteristics of the uncured gumstock compositions, and properties of cured gumstocks, are shown in Table V.

TABLE V

| Curing characteristics | 3 | 4 | 5 | 6 | 7 | 8 | 9 | 10 | 11 | 12 |
|---|---|---|---|---|---|---|---|---|---|---|
| ODR, 177°C | | | | | | | | | | |
| $M_L$, N•m | 1.92 | 1.92 | 2.03 | 2.03 | 1.69 | 1.92 | 1.36 | 1.92 | 1.81 | 1.69 |
| $M_H$, N•m (12 minutes) | 3.62 | 6.33 | 6.21 | 5.65 | 7.91 | 4.75 | 3.95 | 6.33 | 6.55 | 5.88 |
| $t_{s1}$, minutes | 2.0 | 1.3 | 1.3 | 1.5 | 2.0 | 1.8 | 3.1 | 1.8 | 1.7 | 1.7 |
| $t_{5.6}$, minutes | — | 2.6 | 2.6 | 7.0 | 3.4 | — | — | 3.6 | 3.2 | 3.4 |
| Properties of cured gumstock | | | | | | | | | | |
| Press cure properties (10 min./177°C) | | | | | | | | | | |
| Tensile strength, MPa | 7.37 | 9.29 | 9.60 | 9.53 | 9.86 | 9.02 | 8.71 | 9.79 | 9.12 | 9.94 |
| Elongation at break, % | 730 | 427 | 409 | 456 | 374 | 536 | 646 | 464 | 376 | 446 |
| Modulus, 100%, MPa | 1.91 | 2.46 | 2.45 | 2.34 | 3.23 | 2.16 | 1.92 | 2.36 | 2.52 | 2.26 |
| Hardness, Shore A | 66 | 67 | 67 | 67 | 68 | 67 | 66 | 67 | 66 | 66 |
| Postcure properties (20 h/260°C): | | | | | | | | | | |
| Tensile strength, MPa | 8.15 | 12.66 | 13.29 | 12.07 | 12.51 | 10.92 | 11.80 | 13.47 | 10.62 | 12.18 |
| Elongation at break, % | 517 | 283 | 297 | 270 | 242 | 386 | 337 | 312 | 247 | 274 |
| Modulus, 100%, MPa | 2.02 | 2.96 | 2.88 | 2.93 | 3.57 | 2.60 | 2.43 | 2.79 | 2.03 | 2.69 |
| Hardness Shore A | 68 | 68 | 67 | 67 | 69 | 67 | 67 | 68 | 67 | 67 |

TABLE V (continued)

| | 3 | 4 | 5 | 6 | 7 | 8 | 9 | 10 | 11 | 12 |
|---|---|---|---|---|---|---|---|---|---|---|
| Aging properties (70 h/275°C): | | | | | | | | | | |
| Tensile strength, MPa | 3.81 | 6.03 | 6.90 | 7.31 | 7.18 | 4.97 | 6.79 | 7.61 | 7.69 | 8.42 |
| Elongation at break, % | 640 | 326 | 327 | 287 | 248 | 500 | 393 | 311 | 285 | 265 |
| Modulus, 100%, MPa | 1.60 | 2.23 | 2.36 | 2.68 | 3.05 | 1.99 | 2.05 | 2.78 | 3.03 | 3.16 |
| Hardness, Shore A | 70 | 70 | 68 | 71 | 72 | 69 | 71 | 71 | 70 | 70 |
| Compression set (70 h/200°C),% | 52.8 | 28.2 | 27.5 | 35.5 | 30.6 | 42.6 | 33.0 | — | — | — |

In control Run 3, wherein no fluoroaliphatic sulfonamide was present, torque obtained after 12 minutes in the ODR test was lower than that in runs wherein the fluoroaliphatic sulfonamide was present. In addition, lower tensile strength and modulus were observed for press cured, post cured and aged fluorocarbon elastomer in Run 3 than for fluorocarbon elastomers in runs utilizing fluoroaliphatic sulfonamide. Moreover, very high elongation and a high compression set indicated a low state of cure for the fluorocarbon elastomer in Run 3.

Example 3

Following the procedure of Example 2, four compounded curable fluorocarbon elastomer gumstocks were prepared. In Runs 14—17, the gumstock contained a fluoroaliphatic sulfonamide curing agent of this invention in the free non-salt form. The identities and quantities of the various ingredients are shown in Table VI.

TABLE VI

| Curable gumstock ingredients | Parts |
|---|---|
| FKM C, parts | 100 |
| Carbon black (N-990), phr | 30 |
| MgO, phr | 3 |
| $Ca(OH)_2$, phr | 6 |
| TPBPC, mhr x $10^3$ | 1.22 |
| Bisphenol AF, mhr x $10^3$ | 2.23 |
| Fluoroaliphatic sulfonamide curing agent, mhr x $10^3$ | 1.22 |

The fluoroaliphatic sulfonamide curing agent for each run is listed below:

| Run no. | Curing agent |
|---|---|
| 13 | Control |
| 14 | $C_8F_{17}SO_2N(CH_3)H$ |
| 15 | $C_4F_9SO_2N(CH_3)H$ |
| 16 | $C_8F_{17}SO_2N(C_{12}H_{25})H$ |
| 17 | $C_8F_{17}C_2H_4SO_2N(CH_3)H$ |

Curing characteristics of the uncured gumstocks, and properties of the cured gumstocks were determined and are shown in Table VII.

TABLE VII

| Curing characteristics | Run no. | | | | |
|---|---|---|---|---|---|
| | 13 | 14 | 15 | 16 | 17 |
| ODR, 177°C: | | | | | |
| $M_L$, N·m | 1.92 | 2.05 | 1.86 | 1.82 | 1.81 |
| $M_H$, N·m, 12 minutes | 3.62 | 6.44 | 6.33 | 5.76 | 3.84 |
| $t_{s1}$, minutes | 2.0 | 1.5 | 1.6 | 1.8 | 1.5 |
| $t_{5.6}$, minutes | — | 2.9 | 3.1 | 6.0 | — |
| Properties of cured gumstock | | | | | |
| Press cure properties (10 min/177°C) | | | | | |
| Tensile strength, MPa | 7.37 | 9.47 | 9.68 | 9.35 | 7.97 |
| Elongation at break, % | 730 | 373 | 424 | 459 | 649 |
| Modulus, 100%, MPa | 1.91 | 2.49 | 2.46 | 2.27 | 2.02 |
| Hardness, Shore A | 66 | 67 | 67 | 67 | 66 |
| Postcure properties (20 h/260°C): | | | | | |
| Tensile strength, MPa | 8.15 | 11.55 | 12.97 | 12.35 | 8.78 |
| Elongation at break, % | 517 | 267 | 281 | 291 | 445 |
| Modulus, 100%, MPa | 2.02 | 2.88 | 2.89 | 2.73 | 2.50 |
| Hardness, Shore A | 68 | 67 | 67 | 67 | 68 |
| Aging properties (70 h/275°C): | | | | | |
| Tensile strength, MPa | 3.81 | 7.37 | 7.18 | 7.13 | — |
| Elongation at break, % | 640 | 331 | 326 | 268 | — |
| Modulus, 100%, MPa | 1.60 | 2.43 | 2.25 | 2.63 | — |
| Hardness, Shore A | 70 | 68 | 70 | 71 | — |
| Compression set (70 h/200°C), % | 52.8 | 30.2 | 26.3 | 38.6 | — |

Generally higher tensile strength and modulus were observed for the cured gumstocks containing the curing agent of this invention (see Runs 14—17).

Example 4

Following the procedure of Example 2, fourteen compounded curable fluorocarbon elastomer gumstocks were prepared containing various conventional organic dihydroxy curing agents. In one half of the runs, the gumstocks contained a fluoroaliphatic sulfonamide curing agent of this invention. The other runs were comparative runs. The identities and amounts of the various ingredients are shown in Table VIII.

TABLE VIII

| Curable gumstock ingredients | Run no. 18 | 19 | 20 | 21 | 22 | 23 | 24 | 25 | 26 | 27 | 28 | 29 | 30 | 31 |
|---|---|---|---|---|---|---|---|---|---|---|---|---|---|---|
| FRM C, parts | 100 | 100 | 100 | 100 | 100 | 100 | 100 | 100 | 100 | 100 | 100 | 100 | 100 | 100 |
| Carbon black (N-990), phr | 30 | 30 | 30 | 30 | 30 | 30 | 30 | 30 | 30 | 30 | 30 | 30 | 30 | 30 |
| MgO, phr | 3 | 3 | 3 | 3 | 3 | 3 | 3 | 3 | 3 | 3 | 3 | 3 | 3 | 3 |
| $Ca(OH)_2$, phr | 6 | 6 | 6 | 6 | 6 | 6 | 6 | 6 | 6 | 6 | 6 | 6 | 6 | 6 |
| TPBPC, mhr x $10^3$ | 1.22 | 1.22 | 1.22 | 1.22 | 1.22 | 1.22 | 1.22 | 1.22 | 1.22 | 1.22 | 1.22 | 1.22 | 1.22 | 1.22 |
| Fluoroaliphatic sulfonamide curing agent | | | | | | | | | | | | | | |
| $C_8F_{17}SO_2N(CH_3)H$, mhr x $10^3$ | — | 1.22 | — | 1.22 | — | 1.22 | — | 1.22 | — | 1.22 | — | 1.22 | — | 1.22 |
| Dihydroxy curing agents (a) | | | | | | | | | | | | | | |
| Bisphenol AF, mhr x $10^3$ | 6.50 | 6.50 | — | — | — | — | — | — | — | — | — | — | — | — |
| Bisphenol S, mhr x $10^3$ | — | — | 6.50 | 6.50 | — | — | — | — | — | — | — | — | — | — |
| Bisphenol C, mhr x $10^3$ | — | — | — | — | 6.50 | 6.50 | — | — | — | — | — | — | — | — |
| Bisphenol, mhr x $10^3$ | — | — | — | — | — | — | 6.50 | 6.50 | — | — | — | — | — | — |
| HQ, mhr x $10^3$ | — | — | — | — | — | — | — | — | 6.50 | 6.50 | — | — | — | — |
| Bisphenol A-AE mixture, mhr x $10^3$ | — | — | — | — | — | — | — | — | — | — | 3.80 | 3.80 | — | — |
| FC-diol, mhr x $10^3$ | — | — | — | — | — | — | — | — | — | — | — | — | 6.50 | 6.50 |

(a) Structures of co-curing agents are shown in Table I.

Curing characteristics of the uncured gumstocks, and properties of the cured gumstocks were determined, and are shown in Table IX.

TABLE IX

| | Run No. | | | | | | |
|---|---|---|---|---|---|---|---|
| Curing characteristics | 18 | 19 | 20 | 21 | 22 | 23 | 24 |
| ODR, 177°C: | | | | | | | |
| $M_L$, N·m | 1.02 | 0.68 | 1.24 | 0.68 | 1.47 | 0.79 | 1.47 |
| $M_H$, N·m; 12 minutes | 10.96 | 10.39 | 2.37 | 5.65 | 5.76 | 7.34 | 6.78 |
| $t_{s1}$, minutes | 6.0 | 5.0 | 7.2 | 6.0 | 4.8 | 4.8 | 3.0 |
| $t_{5.6}$, minutes | 8.7 | 7.0 | -- | 11.9 | 11.6 | 7.6 | 13 |
| Properties of cured gumstock | | | | | | | |
| Press cure properties (10 min/177°C) | | | | | | | |
| Tensile strength, MPa | 9.45 | 10.91 | 8.93 | 10.70 | 8.94 | 11.02 | 7.96 |
| Elongation at break, % | 235 | 229 | 401 | 320 | 318 | 274 | 259 |
| Modulus, 100%, MPa | 4.32 | 4.58 | 2.72 | 3.16 | 2.96 | 3.44 | 3.36 |
| Hardness, Shore A | 74 | 72 | 70 | -- | 70 | 72 | 68 |
| Postcure properties (20 h/260°C) | | | | | | | |
| Tensile strength, MPa | 14.84 | 15.18 | 12.07 | 15.28 | 12.31 | 13.17 | 9.31 |
| Elongation at break, % | 172 | 158 | 288 | 218 | 248 | 191 | 177 |
| Modulus, 100%, MPa | 6.83 | 6.89 | 3.31 | 4.46 | 3.67 | 4.58 | 4.41 |
| Hardness, Shore A | 76 | 74 | 72 | 73 | 71 | 72 | 69 |

TABLE IX (continued)

| | Run No. | | | | | | |
|---|---|---|---|---|---|---|---|
| | 18 | 19 | 20 | 21 | 22 | 23 | 24 |
| Aging properties (70 h/275°C): | | | | | | | |
| Tensile strength, MPa | 9.47 | 9.89 | 8.38 | 10.40 | 7.79 | 9.45 | 5.39 |
| Elongation at break, % | 206 | 157 | 382 | 265 | 346 | 224 | 266 |
| Modulus, 100%, MPa | 4.27 | 5.49 | 2.47 | 3.21 | 2.49 | 3.43 | 2.61 |
| Hardness, Shore A | 76 | -- | 72 | 74 | 72 | 73 | 73 |
| Compression set (70 h/200°C), % | 14.7 | 19.3 | 23.3 | 18.8 | 21.1 | 20.1 | 25.4 |

TABLE IX (continued)

| | Run No. | | | | | | |
|---|---|---|---|---|---|---|---|
| Curing characteristics | 25 | 26 | 27 | 28 | 29 | 30 | 31 |
| ODR, 177°C: | | | | | | | |
| $M_L$, N•m | 0.68 | 1.47 | 1.24 | 1.81 | 1.69 | 2.37 | 1.92 |
| $M_H$, N•m; 12 minutes | 9.72 | 7.00 | 8.81 | 2.26 | 3.73 | 4.29 | 9.38 |
| $t_{s1}$, minutes | 5.0 | 2.7 | 2.3 | 2.3 | 1.8 | 1.4 | 1.4 |
| $t_{5.6}$, minutes | 8 | 4.5 | 3.6 | -- | -- | -- | 9.38 |
| Properties of cured gumstock | | | | | | | |
| Press cure properties (10 min/177°C) | | | | (a) | | | |
| Tensile strength, MPa | 10.42 | 8.96 | 10.51 | -- | 10.34 | 5.56 | 10.30 |
| Elongation at break, % | 214 | 299 | 258 | -- | 594 | 526 | 269 |
| Modulus, 100%, MPa | 4.23 | 3.06 | 3.58 | -- | 1.92 | 2.16 | 3.50 |
| Hardness, Shore A | 69 | 67 | 67 | -- | 64 | 66 | 69 |
| Postcure properties (20 h/260°C) | | | | | | | |
| Tensile strength, MPa | 15.18 | 13.24 | 14.22 | -- | 12.53 | 9.71 | 15.26 |
| Elongation at break, % | 171 | 242 | 187 | -- | 236 | 396 | 188 |
| Modulus, 100%, MPa | 5.81 | 3.67 | 4.51 | -- | 3.41 | 2.72 | 5.34 |
| Hardness, Shore A | 70 | 67 | 67 | -- | 68 | 68 | 70 |

TABLE IX (continued)

| | Run No. | | | | | | |
|---|---|---|---|---|---|---|---|
| | 25 | 26 | 27 | 28 | 29 | 30 | 31 |
| Aging properties (70 h/275°C): | | | | | | | |
| Tensile strength, MPa | 8.63 | 6.55 | 9.13 | -- | 7.67 | -- | 10.96 |
| Elongation at break, % | 159 | 348 | 216 | -- | 207 | -- | 198 |
| Modulus, 100%, MPa | 4.85 | 2.19 | 3.54 | -- | 3.45 | -- | 3.67 |
| Hardness, Shore A | 68 | 67 | 69 | -- | 66 | -- | -- |
| Compression set (70 h/200°C), % | 24.0 | 22.4 | 25.5 | -- | 35.9 | -- | 18.3 |

(a) poor cured properties

In general, faster cure rates (as indicated by the value of $t_{5.6}$ and the higher torque after 12 minutes in the ODR test), and higher tensile strengths of cured elastomers were obtained for elastomer gumstocks containing the fluoroaliphatic sulfonamides of this invention.

Example 5

Following the procedure of Example 2, six compounded curable fluorocarbon elastomer gumstocks were prepared containing various conventional organo-onium cure accelerators. In one half of the runs (33, 35, and 37), the gumstock contained a fluoroaliphatic sulfonamide curing agent of this invention. The other runs (32, 34, and 36) were comparative runs. The identities and amounts of the various ingredients are shown in Table X.

TABLE X

| Curable gumstock ingredients | Run no. 32 | 33 | 34 | 35 | 36 | 37 |
|---|---|---|---|---|---|---|
| FKM C, parts | 100 | 100 | 100 | 100 | 100 | 100 |
| Carbon black (N-990), phr | 30 | 30 | 30 | 30 | 30 | 30 |
| MgO, phr | 3 | 3 | 3 | 3 | 3 | 3 |
| $Ca(OH)_2$, phr | 6 | 6 | 6 | 6 | 6 | 6 |
| Bisphenol AF, mhr x $10^3$ | 2.23 | 2.23 | 2.23 | 2.23 | 2.23 | 2.23 |
| $C_8F_{17}SO_2N(CH_3)Na$, mhr x $10^3$ | -- | 1.22 | -- | 1.22 | -- | 1.22 |
| Cure accelerators[a] | | | | | | |
| TPBPC, mhr x $10^3$ | 1.22 | 1.22 | -- | -- | -- | -- |
| TBBAC, mhr x $10^3$ | -- | -- | 1.22 | 1.22 | -- | -- |
| TTSC, mhr x $10^3$ | -- | -- | -- | -- | 1.22 | 1.22 |

a See Table II for structures of cure accelerators.

Curing characteristics of the uncured gumstocks, and properties of the cured gumstocks were determined, and are shown in Table XI.

TABLE XI

| Curing characteristics | Run no. 32 | 33 | 34 | 35 | 36 | 37 |
|---|---|---|---|---|---|---|
| ODR, 177°C: | | | | | | |
| $M_L$, N·m | 1.92 | 1.92 | 1.58 | 1.64 | 1.41 | 1.58 |
| $M_H$, N·m; 12 minutes | 3.62 | 6.33 | 2.82 | 5.65 | 2.60 | -- |
| $t_{s1}$, minutes | 2.0 | 1.3 | 2.1 | 1.9 | 3.3 | 2.9 |
| $t_{5.6}$, minutes | -- | 2.6 | -- | 5.0 | -- | -- |
| Properties of cured gumstock | | | | | | |
| Press cure properties (10 min/177°C) | | | | | | |
| Tensile strength, MPa | 7.37 | 6.33 | 7.65 | 9.84 | 4.20 | 9.23 |
| Elongation at break, % | 730 | 427 | 673 | 415 | 765 | 529 |
| Modulus, 100%, MPa | 1.91 | 2.46 | 2.03 | 2.65 | 1.63 | 2.16 |
| Hardness, Shore A | 66 | 67 | 67 | 68 | 65 | 66 |
| Postcure properties (20 h /260°C) | | | | | | |
| Tensile strength, MPa | 8.15 | 12.66 | 8.80 | 12.45 | 4.95 | 11.87 |
| Elongation at break, % | 517 | 283 | 500 | 268 | 680 | 403 |
| Modulus, 100%, MPa | 2.02 | 2.96 | 2.26 | 3.11 | 1.81 | 2.34 |
| Hardness, Shore A | 68 | 68 | 67 | 67 | 67 | 67 |
| Aging properties (70 h/275°C): | | | | | | |
| Tensile strength, MPa | 3.81 | 6.93 | 4.02 | 6.92 | -- | -- |
| Elongation at break, % | 640 | 326 | 521 | 280 | -- | -- |
| Modulus, 100%, MPa | 1.60 | 2.23 | 1.64 | 2.69 | -- | -- |
| Hardness, Shore A | 70 | 70 | 68 | 71 | -- | -- |
| Compression set (70 h/200°C), % | 52.8 | 28.2 | 66.8 | 36.1 | -- | -- |

In general, faster cure rates, higher tensile strengths, and lower compression sets of cured elastomers were obtained for elastomer gumstocks containing the fluoroaliphatic sulfonamides of this invention.

Example 6

Following the general procedure of Example 1, four compounded curable fluorocarbon elastomer gumstocks were prepared, each containing two different conventional curing agents and further containing, in Runs 39 and 41, a fluoroaliphatic sulfonamide curing agent of this invention. Runs 38 and 40 were comparative runs. The identities and amounts of the various ingredients are shown in Table XII.

TABLE XII

| | Run no. | | | |
|---|---|---|---|---|
| Curable gumstock ingredients | 38 | 39 | 40 | 41 |
| FKM C, parts | 100 | 100 | 100 | 100 |
| Carbon black (N-990), phr | 30 | 30 | 30 | 30 |
| MgO[a], phr | 15 | 15 | 15 | 15 |
| DIAK No. 1[b], phr | 8.70 | 8.70 | — | — |
| DIAK No. 3[c], phr | — | — | 8.70 | 8.70 |
| $C_8F_{17}SO_2N(CH_3)H$, phr | — | 1.86 | — | 1.86 |

[a] MAGLITE Y, commercially available from Merck.
[b] Hexamethylenediamine carbamate, $^{+}H_3N(CH_2)_6NHCOO^{-}$
[c] N,N′-dicinnamylidine-1,6-hexanediamine, $(CH_2)_6(N{=}CHCH{=}CHC_6H_5)_2$

Curing characteristics and properties of cured gumstock are shown in Table XIII.

TABLE XIII

| Curing characteristics | Run no. 38 | 39 | 40 | 41 |
|---|---|---|---|---|
| ODR, 177°C: | | | | |
| $M_L$, N·m | 1.92 | 1.81 | 0.90 | 1.13 |
| $M_H$, N·m; 12 minutes | 6.89 | 7.34 | 2.60 | 8.02 |
| $t_{s1}$, minutes | 2.5 | 2.4 | 5.0 | 4.0 |
| $t_{5.6}$, minutes | 7.0 | 6.4 | — | 7.8 |
| Properties of cured gumstock | | | | |
| Press cure properties (10 min/177°C)[a] | | | | |
| Tensile strength, MPa | 13.82 | 12.62 | 10.40 | 9.38 |
| Elongation at break, % | 268 | 242 | 520 | 300 |
| Modulus, 100%, MPa | 3.58 | 3.58 | 2.01 | 3.10 |
| Hardness, Shore A | 68 | 68 | 65 | 69 |
| Postcure properties (16 h/260°C) | | | | |
| Tensile strength, MPa | 13.20 | 11.34 | 9.98 | 10.31 |
| Elongation at break, % | 232 | 187 | 247 | 145 |
| Modulus, 100%, MPa | 4.06 | 4.54 | 3.18 | 6.40 |
| Hardness, Shore A | 71 | 73 | 74 | 83 |

[a] Run no. 40 was press cured for 20 min. at 177°C

A faster cure rate and a more highly crosslinked cured elastomer, as indicated by a higher modulus (except press cured gumstock of Run 39) and a lower elongation at break, were obtained for elastomer gumstocks containing the fluoroaliphatic sulfonamides of this invention.

Example 7

A vinylidene fluoride copolymer gum (FKM C) and a vinylidene fluoride terpolymer gum (FKM T) were compounded in several different runs on a two-roll rubber mill with various conventional vulcanizing agents and adjuvants. FKM C contains 80 mole% $CF_2{=}CH_2$ and 20 mole % $CF_3CF{=}CF_2$. FKM T contains 60 mole % $CF_2{=}CH_2$, 20 mole % $CF_3CF{=}CF_2$, and 20 mole % $CF_2{=}CF_2$. In two of the runs, a fluoroaliphatic sulfonamide curing agent of this invention was incorporated into the formulation. The milled, compounded gumstocks were evaluated for curing characteristics, and properties of the cured gumstocks were measured after press cure, post cure, and aging. Compression set was also determined. The runs and results obtained are shown in Table XIV. Control runs, i.e. formulations without fluoroaliphatic sulfonamide curing agent, were also run for the purpose of comparison.

TABLE XIV

| Curable gumstock ingredients | Run no. 42 | 43 | 44 | 45 |
|---|---|---|---|---|
| FKM C, parts | 100 | 100 | 0 | 0 |
| FKM T, parts | — | — | 100 | 100 |
| Carbon black (N-990), phr | 30 | 30 | 30 | 30 |
| MgO[a], phr | 3 | 3 | 3 | 3 |
| $Ca(OH)_2$, phr | 6 | 6 | 6 | 6 |
| TPBPC[b], phr | 0.475 | 0.475 | 0.475 | 0.475 |
| Bisphenol AF[c], phr | 2.18 | 2.18 | 2.18 | 2.18 |
| $C_8F_{17}SO_2N(CH_3)Na$, phr | 0 | 0.65 | 0 | 0.65 |
| Curing characteristics | | | | |
| ODR, 177°C: | | | | |
| $M_L$, N·m | 1.02 | 0.96 | 2.26 | 1.92 |
| $M_H$, N·m, 12 min. | 11.1 | 11.5 | 10.8 | 12.2 |
| $t_{s1}$, minutes | 5.3 | 4.0 | 4.1 | 5.1 |
| $t_{5.6}$, minutes | 7.3 | 5.9 | 6.7 | 7.6 |
| Properties of cured gumstock | | | | |
| Press cure properties (10 min/177°C): | | | | |
| Tensile strength, MPa | 8.62 | 9.39 | 9.78 | 8.45 |
| Elongation at break, % | 255 | 232 | 306 | 265 |
| Modulus, 100% MPa | 4.12 | 4.29 | 4.42 | 4.06 |
| Hardness, Shore A | 74 | 75 | 76 | 79 |
| Postcure properties (20 h/260°C): | | | | |
| Tensile strength, MPa | 14.70 | 13.48 | 15.42 | 14.91 |
| Elongation at break, % | 184 | 169 | 222 | 179 |
| Modulus, 100%, MPa | 6.45 | 6.37 | 5.90 | 6.89 |
| Hardness, Shore A | 76 | 77 | 80 | 82 |
| Aging properties (70 h/275°C): | | | | |
| Tensile strength, MPa | 9.71 | 10.01 | 8.06 | 8.01 |
| Elongation at break, % | 193 | 183 | 338 | 254 |
| Modulus, 100%, MPa | 4.84 | 4.83 | 3.14 | 3.96 |
| Hardness, Shore A | 77 | 77 | 80 | 82 |
| Compression set: (70 h/200°C), % | 20 | 18 | 24 | 21.7 |

[a] MAGLITE D, commercially available from Merck.

[b] Cure accelerator No. 1 in Table II.

[c] Curing agent No. 1 in Table I.

A higher torque ($M_H$) was observed after 12 minutes for FKM C and FKM T containing the fluoroaliphatic sulfonamide curing agent of this invention (Runs 43 and 45). A lower compression set was also obtained for the elastomers of Runs 43 and 45.

Various modifications and alterations of this invention will become apparent to those skilled in the art without departing from the scope of this invention as claimed, and it should be understood that this invention is not to be unduly limited to the illustrative embodiments set forth herein.

**Revendications**

1. Composition comprenant une gomme d'élastomère fluorocarboné, un agent de durcissement formé par un sulfonamide fluoraliphatique et facultativement un autre agent de durcissement, la concentration totale du ou des agents de durcissement étant d'au moins 0,001 mole par 100 g de la gomme susdite et étant suffisante pour la réticulation de la gomme d'élastomère, à la condition que, si l'agent de durcissement de sulfonamide est monofonctionnel, dans ce cas:

(a) l'autre agent de durcissement est nécessairement présent, et

(b) la quantité du sulfonamide fluoraliphatique monofonctionnel à titre d'agent de durcissement est de l'ordre de 0,0002 à 0,006 mole par 100 g d'élastomère fluorocarboné.

2. Composition suivant la revendication 1, caractérisée en ce que le sulfonamide fluoraliphatique utilisé à titre d'agent durcissant est représenté par la formule générale:

$$R_f(A)_ZSO_2NR(M_{1/x}) \quad (I)$$

$$\text{ou } R_f'[(A)_ZSO_2NR(M_{1/x})]_2 \quad (II)$$

où

$R_f$ représente un radical fluoraliphatique monovalent de 1 à 20 atomes de carbone,

$R_f'$ représente un radical fluoraliphatique divalent comportant de 1 à 20 atomes de carbone,

A représente une liaison organique,

Z est égal à zéro ou 1,

R représente un atome d'hydrogène ou un radical alkyle de 1 à 20 atomes de carbone, et

M représente un atome d'hydrogène ou un cation formateur de sel d'une valence x, qui est égale à 1, 2 ou 3.

3. Composition suivant la revendication 2, caractérisée en ce que A est choisi dans le groupe comprenant $—CR^1R^2—$, $—CR^1R^2CR^3R^4—$, et $—CR^1{=}CR^2—$, où $R^1$, $R^2$, $R^3$ et $R^4$ sont choisis dans le groupe comprenant un atome d'hydrogène, un atome de fluor, un atome de chlore et un groupe alkyle de 1 ou 2 atomes de carbone.

4. Composition suivant la revendication 2 ou la revendication 3, caractérisée en ce que le sulfonamide fluoraliphatique à titre d'agent de durcissement est de la formule I, où $R_f$ représente $C_8F_{17}$, $C_4F_9$ ou $C_8F_{17}C_2H_4$.

5. Composition suivant l'une quelconque des revendications précédentes, caractérisé en ce que la gomme d'élastomère fluorocarboné est un copolymère de fluorure de vinylidène et d'au moins une oléfine contenant du fluor et, facultativement, d'un éther alkyl vinylique fluoré.

6. Composition suivant la revendication 4, caractérisée en ce que la gomme d'élastomère fluorocarboné est un polymère de fluorure de vinylidène et d'hexafluoropropène.

7. Composition suivant la revendication 4, caractérisée en ce que la gomme d'élastomère fluorocarboné est un polymère de fluorure de vinylidène, d'hexafluoropropène et de tétrafluoréthylène.

8. Composition suivant l'une quelconque des revendications précédentes, caractérisé en ce que l'autre agent durcissant est choisi dans le groupe comprenant les composés polyhydroxy, les composés de polyamine et leurs dérivés.

9. Composition suivant l'une quelconque des revendications précédentes, caractérisée en ce qu'elle comprend en outre un accélérateur de durcissement.

10. Composition suivant la revendication 9, caractérisée en ce que l'accélérateur de durcissement est un composé organique d'onium.

11. Composition suivant l'une quelconque des revendications précédentes, caractérisée en ce qu'elle comprend en outre un accepteur d'acide.

12. Composition suivant l'une quelconque des revendications précédentes, caractérisée en ce qu'elle comprend en outre un agent de renforcement.

13. Article façonné, comprenant une composition suivant l'une quelconque des revendications précédentes, cette composition ayant été durcie.

14. Procédé de préparation d'un article façonné, comprenant les phases suivantes:

(a) la préparation d'une composition durcissable suivant l'une quelconque des revendications 1 à 12,

(b) le chauffage de cette composition jusqu'à une température suffisante pour la durcir, et

(c) la récupération de l'article façonné.

## Claims

1. A composition comprising a fluorocarbon elastomer gum, a fluoroaliphatic sulfonamide curing agent and optionally a further curing agent, the total concentration of curing agent(s) being at least 0.001 moles per hundred grams of said gum and sufficient to crosslink the elastomer gum, subject to the proviso that if the sulfonamide curing agent is monofunctional then:

a) said another curing agent is necessarily present, and

b) the amount of monofunctional fluoroaliphatic sulfonamide curing agent is in the range 0.0002 to 0.006 moles per hundred grams fluorocarbon elastomer.

2. A composition as claimed in claim 1 wherein said fluoroaliphatic sulfonamide curing agent is represented by the general formula

$$R_f(A)_ZSO_2NR(M_{1/x}) \quad (I)$$

$$\text{or } R_f'[(A)_ZSO_2NR(M_{1/x})]_2 \quad (II)$$

wherein

$R_f$ represents a monovalent fluoroaliphatic radical having from 1 to 20 carbon atoms,

$R_f'$ represents a divalent fluoroaliphatic radical having from 1 to 20 carbon atoms,

A represents an organic linkage,

Z is zero or one,

R represents hydrogen atom or alkyl radical having from 1 to 20 carbon atoms, and

M represents hydrogen atom or salt forming cation with valence x, which is 1, 2, or 3.

3. A composition as claimed in claim 2 wherein A is selected from the group consisting of $—CR^1R^2—$, $—CR^1R^2CR^3R^4—$, and $—CR^1=CR^2—$, wherein $R^1$, $R^2$, $R^3$, and $R^4$ are selected from the group consisting of hydrogen atom, fluorine atom, chlorine atom, and alkyl group of 1 or 2 carbon atoms.

4. A composition as claimed in claim 2 or claim 3 wherein said fluoroaliphatic sulfonamide curing agent is of formula I in which $R_f$ is $C_8F_{17}$, $C_4F_9$ or $C_8F_{17}C_2H_4$.

5. A composition as claimed in any preceding claim wherein said fluorocarbon elastomer gum is a copolymer of vinylidene fluoride and at least one fluorine-containing olefin and, optionally, a fluorinated alkyl vinyl ether.

6. A composition as claimed in claim 4 wherein the fluorocarbon elastomer gum is a polymer of vinylidene fluoride and hexafluoropropene.

7. A composition as claimed in claim 4 wherein the fluorocarbon elastomer gum is a polymer of vinylidene fluoride, hexafluoropropene, and tetrafluoroethylene.

8. A composition as claimed in any preceding claim wherein said further curing agent is selected from the group consisting of polyhydroxy compounds, polyamine compounds, and derivatives thereof.

9. A composition as claimed in any preceding claim further including a cure accelerator.

10. A composition as claimed in claim 9 wherein the cure accelerator is an organo-onium compound.

11. A composition as claimed in any preceding claim further including an acid acceptor.

12. A composition as claimed in any preceding claim further including a reinforcing agent.

13. A shaped article comprising a composition as claimed in any preceding claim which has been cured.

14. Method of preparing a shaped article comprising the steps of:

a) providing a curable composition according to any of claims 1 to 12,

b) heating said composition to a temperature sufficient to cure said composition, and

c) recovering said shaped article.

## Patentansprüche

1. Zusammensetzung mit einem Fluorkohlenstoffelastomer-Gummiharz, einem aus einem fluoraliphatischen Sulfonamid bestehenden Härtemittel und gegebenenfalls einem weiteren Härtemittel, wobei die Gesamtkonzentration des Härtemittels oder der Härtemittel mindestens 0,001 Mol pro 100 g des Gummiharzes beträgt und für eine Vernetzung des Elastomer-Gummiharzes genügt, und wenn das aus einem Sulfonamid bestehende Härtemittel monofunktional ist

a) das andere Härtemittel unbedingt vorhanden ist und

b) die Menge des aus einem monofunktionalen fluoraliphatischen Sulfonamid bestehenden Härtemittel im Bereich von 0,002 bis 0,006 Mol pro 100 g Fluorkohlenstoff-Elastomer beträgt.

2. Zusammensetzung nach Anspruch 1, dadurch gekennzeichnet, daß das aus einem fluoraliphatischen Sulfonamid bestehende Härtemittel durch die allgemeine Formel

$$R_f(A)_ZSO_2NR(M_{1/x}) \quad (I)$$

$$\text{oder } R_f'[(A)_ZSO_2NR(M_{1/x})]_2 \quad (II)$$

dargestellt ist, in denen

$R_f$ ein einwertiges fluoraliphatisches Radikal mit 1 bis 20 Kohlenstoffatomen darstellt,

$R_f'$ ein zweiwertiges fluoraliphatisches Radikal mit 1 bis 20 Kohlenstoffatomen darstellt,

A eine organische Bindung darstellt,

Z null oder eins ist,

R ein Wasserstoffatom oder ein Alkylradikal mit 1 bis 20 Kohlenstoffatomen darstellt und

M ein Wasserstoffatom oder ein salzbildendes Kation mit der Wertigkeit x, die 1, 2 oder 3 beträgt, darstellt.

3. Zusammensetzung nach Anspruch 2, dadurch gekennzeichnet, daß A aus der Gruppe ausgewählt ist, die aus $—CR^1R^2—$, $—CR^1R^2CR^3R^4—$ und $—CR^1=CR^4—$ besteht, wobei $R^1$, $R^2$, $R^3$ und $R^4$ aus der Gruppe ausgewählt sind, die aus dem Wasserstoffatom, dem Fluoratom, dem Chloratom und den Alkylgruppen mit 1 oder 2 Kohlenstoffatomen besteht.

4. Zusammensetzung nach Anspruch 2 oder 3, dadurch gekennzeichnet, daß das aus dem fluoraliphatischen Sulfonamid bestehende Härtemittel die Formel I hat, in der $R_fC_8F_{17}$, $C_4F_9$ oder $C_8F_{17}C_2H_4$ ist.

5. Zusammensetzung nach einem der vorhergehenden Ansprüche, dadurch gekennzeichnet, daß das aus einem Fluorkohlenstoffelastomer bestehende Gummiharz ein Copolymer aus Vinylidenfluorid und mindestens einem fluorhaltigen Olefin und gegebenenfalls einem fluorierten Alkylvinylether ist.

6. Zusammensetzung nach Anspruch 4, dadurch gekennzeichnet, daß das aus einem Fluorkohlenstoffelastomer bestehende Gummiharz ein Polymer aus Vinylidenfluorid und Hexafluorpropen ist.

7. Zusammensetzung nach Anspruch 4, dadurch gekennzeichnet, daß das aus einem Fluorkohlenstoffelastomer bestehende Gummiharz ein Polymer aus Vinylidenfluorid, Hexafluorpropen und Tetrafluorethylen ist.

8. Zusammensetzung nach einem der vorhergehenden Ansprüche, dadurch gekennzeichnet, daß das weitere Härtemittel aus der Gruppe ausgewählt ist, die aus den Polyhydroxyverbindungen und den Polyaminverbindungen und deren Derivaten besteht.

9. Zusammensetzung nach einem der vorhergehenden Ansprüche, die außerdem einen Härtebeschleuniger enthält.

10. Zusammensetzung nach Anspruch 9, dadurch gekennzeichnet, daß der Härtebeschleuniger eine Organooniumverbindung ist.

11. Zusammensetzung nach einem der vorhergehenden Ansprüche, die außerdem einen Säureakzeptor enthält.

12. Zusammensetzung nach einem der vorhergehenden Ansprüche, die ferner ein Verfestigungsmittel enthält.

13. Geformter Gegenstand, der mindestens teilweise aus einer Zusammensetzung nach einem der vorhergehenden Ansprüche besteht, die gehärtet worden ist.

14. Verfahren zum Herstellen eines geformten Gegenstandes mit folgenden Schritten:

a) es wird eine härtbare Zusammensetzung nach einem der Ansprüche 1 bis 12 beschafft,

b) die Zusammensetzung wird auf eine zum Härten der Zusammensetzung genügende Temperatur erhitzt, und

c) der geformte Gegenstand wird gewonnen.